# EUROPEAN PATENT SPECIFICATION

(11) **EP 1 679 237 B1**
(45) Date of publication and mention of the grant of the patent: **27.02.2008**
(21) Application number: 06000469.4
(22) Date of filing: 11.01.2006
(51) Int. Cl.: B60R 21/16

(54) **Airbag and airbag apparatus**
Gassack und Gassackeinrichtung
Coussin gonflable et dispositif de coussin gonflable

(30) Priority: 13.12.2005 JP 2005359173; 11.01.2005 JP 2005004093; 03.06.2005 JP 2005164227
(43) Date of publication of application: 12.07.2006
(73) Proprietor: TAKATA CORPORATION, Minato-ku, Tokyo 106-8510 (JP)
(72) Inventor: Abe, Kazuhiro, Minato-ku Tokyo 106-8510 (JP)
(74) Representative: Banzer, Hans-Jörg

(56) References cited:
- EP-A- 1 279 566
- EP-A- 1 318 052
- EP-A- 1 442 944
- EP-A- 1 547 876
- EP-A- 1 564 081
- US-A1- 2005 116 455

## Description

The present invention relates to an airbag mounted on a high-speed mobile unit such as a motor vehicle or the like, and more particularly relates to an airbag for protecting a human body by expanding in an emergency due to a collision of the motor vehicle, or the like.

### Background Art

Various kinds of airbag apparatus, such as a driver-side airbag apparatus or the like are used for protecting an occupant in an emergency, such as a collision of the motor vehicle or the like. The driver-side airbag apparatus includes an airbag formed by stitching peripheral edges of each of a front panel, namely a panel of a driver side of the airbag, and a rear panel, namely a panel of a side opposite to the driver side of the airbag. At the center of the rear panel, an inflator-attaching opening for receiving a distal side of the inflator is provided. A periphery of the inflator-attaching opening is fixed to a retainer by bolts, pins, or rivets. In the rear panel, a vent hole for absorbing a impact by discharging gas in the airbag, when the driver drives into the airbag, is provided.

An airbag is disclosed in Japanese Unexamined Patent Application Publication No. 1-311930, in which an inner panel (referred to as "inner gas bag" in the Publication) is provided such that an inflator-attaching opening of a rear panel is linked with a front panel, and inner space of the airbag is thereby partitioned into two of a first chamber at a center thereof and a second chamber at a periphery thereof. In the inner gas bag, a communication opening which allows the first chamber to communicate with the second chamber is provided. When the inflator is activated, the first chamber expands first and immediately behind the expansion of the first chamber, the second chamber expands.

Document EP 1 442 944 A1 discloses an airbag and an airbag apparatus comprising a front panel disposed at an occupant's side, and a rear panel disposed at a side opposite to the occupant, wherein each of peripheral edge portions of the front panel and the rear panel are connected together. The airbag of this document further comprises an attaching opening for a gas generator provided in a center of the rear panel and an inner panel disposed inside the airbag, partitioning an internal part of the airbag into a first chamber at a center thereof and a second chamber surrounding the first chamber. A number of openings are provided for allowing the first chamber to communicate with the second chamber, wherein the openings are spaced evenly around a center of the airbag. Furthermore, vent holes are formed in the rear panel. In an airbag disclosed in this document, for example four openings and two vent holes are provided.

Similar airbags are for example disclosed in US 2005/0116455 A1, EP 1 318 052 A1 or EP 1 279 566 A1.

Document EP 1564081, cited under Article 54(3) EPC, discloses an
airbag configured to be expanded by gas from a gas generator comprising:
a front panel disposed at an occupant side; and a rear panel disposed at a side opposite to the occupant, wherein each of peripheral edge portions of the front panel and the rear panel are connected together, and the airbag further comprising:
an attaching opening for the gas generator provided in a center of the rear panel; and
an inner panel disposed inside the airbag, partitioning an internal part of the airbag into a first chamber at a center thereof and a second chamber surrounding the first chamber wherein
at least one opening for allowing the first chamber to communicate with the second chamber is provided in the airbag.

### Problems to be Solved by the Invention

In Japanese Unexamined Patent Application Publication No. 1-311930, because the communication opening is provided only at the rear panel side of the inner panel, there is a possibility that the airbag is pressed on a steering wheel, when the airbag is expanded.

Accordingly, it is an object of the present invention to provide an airbag that expand smoothly and immediately in a radial direction of the airbag whose internal space is thus partitioned by an inner panel into a first chamber and a second chamber.

### Means for Solving the Problems

According to the invention, this object is achieved by an airbag as defined in claim 1 and an airbag apparatus as defined in claim 6. The dependent claims define preferred and advantageous embodiments of the invention.

An airbag according to the present invention is configured to be expanded by gas from a gas generator and includes: a front panel disposed at an occupant side; and a rear panel disposed at a side opposite to the occupant, in which each of peripheral edge portions of the front panel and the rear panel are connected together, and the airbag further includes: an attaching opening for the gas generator provided in a center of the rear panel; and at least one inner panel disposed inside the airbag, partitioning an internal part of the airbag into a first chamber at a center thereof and a second chamber surrounding the first chamber, in which at least one opening for communicating the first chamber with the second chamber is provided in the airbag, and in which a sum of the opening areas of the at least one opening is determined to be from 40 cm² to 700 cm².

In the airbag at least one vent hole is formed in the rear panel, and a sum A of the opening areas of the at least one opening is greater than a sum S of the opening area of the at least one vent hole.

Furthermore, in the airbag the at least one vent hole is disposed at a side above the center of the airbag when the airbag is in a state of being installed in a high-speed mobile unit, and a sum A₂ of opening areas of openings of the at least one opening disposed at a side below the center of the airbag is greater than a sum A₁ of the opening areas of the opening of the at least one opening disposed at a side above the center of the airbag.

According to a first aspect of the invention, in the airbag at least one front-side opening of the front panel side and at least one rear-side opening of the rear panel side are provided in the inner panel for serving as the opening, and a sum Ar of the opening areas of the at least one rear-side opening is greater than a sum Af of the opening areas of the at least one front-side opening.

According to a second aspect of the invention, in the airbag a thickness of the airbag is from 20 cm to 35 cm, when the airbag is expanded.

According to a third aspect of the invention, the airbag is an airbag for use in a driver's seat connected to a steering wheel and is expanded in a manner so as to cover the occupant side of the steering wheel, in which at least three openings are provided being disposed around a center of a rotation shaft of the steering wheel in approximately even intervals in the inner panel.

According to a fourth aspect of the invention, the airbag is an airbag for use in a driver's seat connected to the steering wheel and is expanded in a manner so as to cover the occupant side of the steering wheel, and when the steering wheel has a posture of a high-speed vehicle that drives straight-ahead, at least one opening is disposed within areas in each of angles of approximately 45° in the left and the right directions around the rotation center of a shaft of the steering wheel, sandwiching a position approximately below the rotation center of the shaft of the steering wheel in the vertical direction in the inner panel.

An airbag apparatus according to the invention includes: an airbag; and a gas generator having a gas blowing outlet, in which the airbag is the airbag mentioned above.

### Advantages

In an airbag and an airbag apparatus according to the present invention, an opening area of at least one communication opening for allowing the first chamber to communicate with the second chamber in the airbag is determined to be from 40 cm² to 700 cm². When the opening area of the opening is less than 40 cm², an amount of discharging gas per unit time from the first chamber to the second chamber becomes too small and there is a possibility that an expansion rate of the second chamber is delayed. Further, when the opening area of the opening is greater than 700 cm², a pressure of gas in the first chamber rises at a slower pace and a rate of gas blown out from the first chamber to the second chamber is decreased resulting in decreasing of an deploying rate of the airbag in a radial direction.

In the airbag, because a sum of the opening areas of the at least one opening is greater than a sum of the opening area of the at least one vent hole, an amount of inflow gas into the second chamber becomes greater than an amount of the gas discharged from the at least one vent hole and as a result, the entire airbag including the second chamber completes an expanding operation earlier.

In the airbag, the at least one vent hole is disposed at a side above the center of the airbag in a state of being installed in a high-speed mobile unit, and because a sum A₂ of the opening areas of the openings disposed at a side below the center of the airbag is greater than a sum A₁ of the opening areas of the openings disposed at a side above the center of the airbag, a problem that the in-flow gas into the second chamber simplistically flows toward the vent hole and is discharged from the airbag is suppressed. As a result, the entire airbag including the second chamber completes an expanding operation earlier.

Thus, by designing the sum of the opening areas of the opening disposed at a side below the center of the airbag to be large, the expansion of the airbag of the side below the center thereof is promoted, and thereby, the airbag can suppress a forward displacement of the occupant by catching a chest region or an abdominal region of the occupant earlier.

In the airbag according to the first aspect, the at least one opening is provided in both a front side and a rear side of an inner panel and the gas from a gas generator is entirely supplied to the second chamber through the opening. Thereby, the second chamber is expanded earlier.

Further, because a sum of the opening areas of the rear-side openings is greater than a sum of the opening areas of the front-side openings, the gas generated by the gas generator is discharged from the rear-side opening in the radial direction, in a large amount. Thereby, the airbag is immediately expanded in the radial direction.

In the airbag according to the second aspect, an upper body of the occupant can be sufficiently protected.

In the construction according to the third aspect, because the openings are disposed in the inner panel in approximately every 120 degrees at a maximum (in a case that the openings are three in number; in a case that the openings are four in number, every 90 degrees; in a case that the openings are five in number, every 72 degrees, and etc.) around the center of the rotating shaft of the steering wheel, whatever the angle of the steering wheel at the driving posture is, at least one opening exists at a side lower than the center of the rotation shaft of the steering wheel. Therefore, whatever the angle of the steering wheel is, the gas is supplied from the first chamber to the lower portion side of the second chamber at this time.

On the other hand, because the steering wheel is usually tilted in a manner such that the lower the position on the steering wheel is, the narrower the interval between the steering wheel and the occupant is, it is required that the lower portion side of the airbag that covers the lower portion side of the steering wheel is promptly expanded and developed in the airbag for use in the driver's seat.

In the construction according to the fourth aspect, when the steering wheel has a posture of a high-speed vehicle that drives straight-ahead, at least one opening is disposed within areas in each of angles of approximately 45° in the left and the right directions around the rotation center of a shaft of the steering wheel, sandwiching a position approximately below the rotation center of the shaft of the steering wheel in the vertical direction in the inner panel. Therefore, an expansion and a development of a lower portion side of the airbag (second chamber) are accelerated.

### Brief Description of the Drawing

FIG. 1 is a cross-section illustrating an airbag and an airbag apparatus which is not an embodiment;
FIG. 2 is an exploded perspective view illustrating the airbag and the airbag apparatus of FIG. 1;
FIG. 3 is an elevation illustrating the airbag of an embodiment; and
FIG. 4 is a cross-section along a IV-IV line of FIG. 3; and
FIG. 5 is a plan view illustrating an airbag which is not an embodiment;
FIG. 6 is a plan view illustrating an airbag which is not an embodiment; and
FIG. 7 is a plan view illustrating an airbag which is not an embodiment.

### Best Mode for Carrying Out the Invention

An embodiment of the present invention will be explained below referring to the drawings.

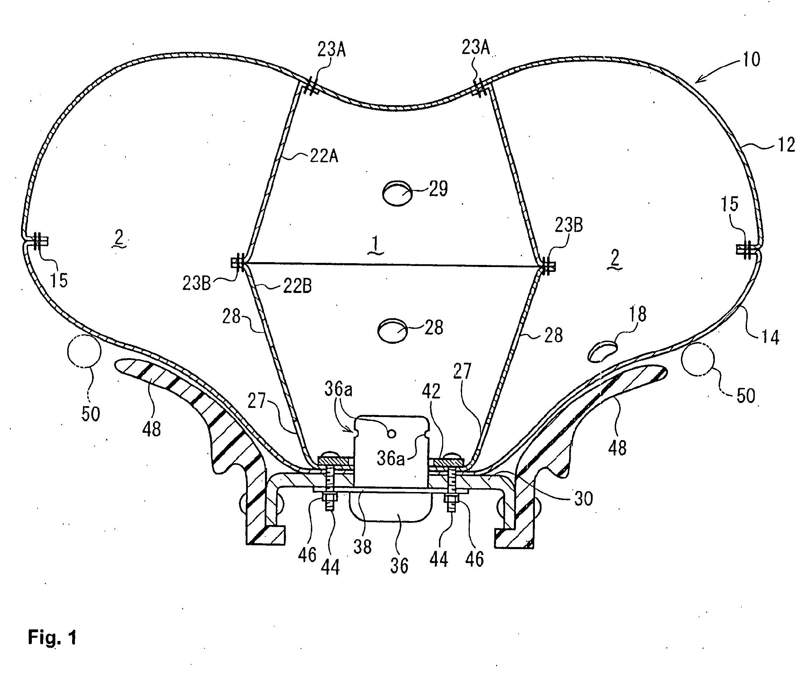

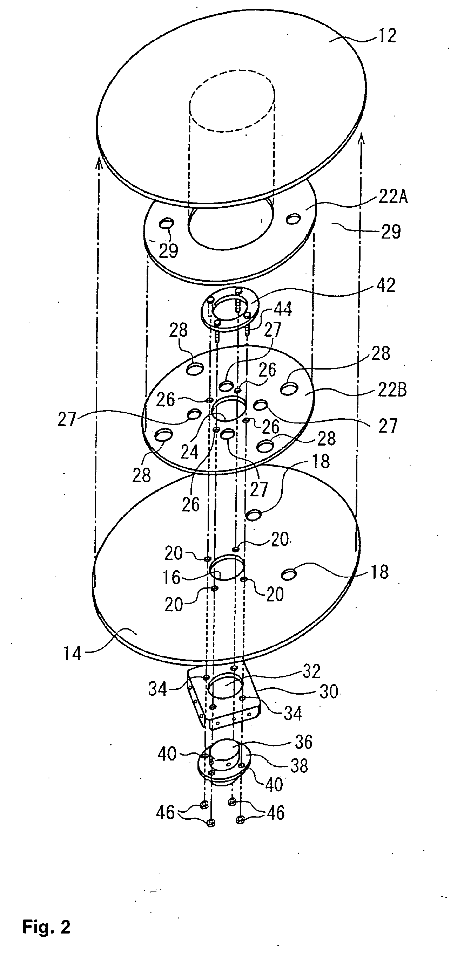

FIG. 1 is a cross-section illustrating a driver-side airbag of a motor vehicle and an airbag apparatus which is not an embodiment according to the present invention, and FIG. 2 is an exploded perspective view of the airbag and the airbag apparatus of FIG. 1.

The airbag 10 is provided with a front panel 12, a rear panel 14, a first inner panel 22A, and a second inner panel 22B, each of which is made of a round-shaped woven cloth. The front panel 12 and the rear panel 14 have the same diameters and formed in a bag-shaped fashion by stitching each of outer peripheral edges thereof together by a seam 15 formed of a thread or the like. The stitched part of the outer peripheral edges has a circular shape going around along the outer periphery of the front panel 12 and the rear panel 14.

An inflator (gas generator)-attaching opening 16 and one or more vent holes 18 are provided in the rear panel 14. The inflator-attaching opening 16 is disposed at a center of the rear panel 14. In addition, the inflator-attaching opening 16 is provided with bolt-penetrating holes 20 disposed around a periphery thereof.

The first inner panel 22A and the second inner panel 22B are provided inside the airbag 10. The first and the second inner panels 22A and 22B are disposed approximately concentrically with the front panel 12 and the rear panel 14 and outer peripheral edge portions of each of the first inner panel 22A and the second inner panel 22B are stitched together by a seam 23B formed with the thread or the like. An inner peripheral edge portion of the first inner panel 22A of the front panel 12 side (i.e., a peripheral edge portion of a distal side of the inner panel 22A in an expanded state of the airbag 10) is stitched with an intermediate part between a central portion and a peripheral edge portion of the front panel 12 by a seam 23A formed with the thread or the like.

At a center portion of the second inner panel 22B of the rear panel 14 side (i.e., a part to be a rear-end side of the second inner panel 22B in an expanded state of the airbag 10), an inflator-attaching opening 24 is disposed approximately concentrically with the inflator-attaching opening 16 of the rear panel 14. The inflator-attaching openings 16 and 24 have approximately the same diameters. Further, bolt-penetrating holes 26 are disposed around the inflator-attaching opening 24 of the inner panel 22B, overlapping with the bolt-penetrating holes 20 of the rear panel 14.

An internal part of the airbag 10 is partitioned into a first chamber 1 at the center thereof and a second chamber 2 surrounding the first chamber 1 by the first and second inner panels 22A and 22B, respectively. Further, the first chamber 1 is located inside the inner panels 22A and 228.

A front-side opening 29 is provided in the first inner panel 22A of the front panel 12 side.

A rear-side opening 28 is disposed at a position relatively adjacent to an outer peripheral edge of the second inner panel 228 and a rear-side opening 27 is also disposed at a position closer to the inner peripheral side than the rear-side opening 28.

In this airbag, the rear-side opening 27 is formed in extension of a gas blowing-out direction of an inflator 36, described later, which is disposed in the first chamber 1 through the inflator-attaching openings 16 and 24. In other words, the rear-side opening 27 is formed at a position facing a gas blowing outlet 36a of the inflator 36.

In this airbag, the rear-side openings 27 and 28 are four in number, respectively, and are disposed at even distances in a circumferential direction of the airbag, as shown in FIG. 2. In addition, a phase of the rear-side openings 27 in the circumferential direction of the airbag is displaced from that of the rear-side openings 28 relative to the center of the airbag.

In this airbag, a sum A of the respective opening areas of the rear-side openings 27 and 28, and the front-side openings 29 is greater than a sum S of the opening areas of the respective vent holes 18. The sum S of the opening areas of the opening of the vent holes 18 may be preferably from 1.5 cm² to 40 cm².

Further, the sum A of the opening areas of the opening of the front-side openings 29, and the rear-side openings 27 and 28 may be from 40 cm² to 700 cm², preferably from 50 cm² to 600 cm², and more preferably from 80 to 200 cm².

Furthermore, a sum Ar of the opening areas of the opening of the rear-side openings 27 and 28 is greater than a sum Af of the opening areas of the opening of the front-side openings 29 in this airbag.

A thickness of the airbag 10 when expanded may be preferably from 20 cm to 35 cm.

An inflator-attaching opening 32 is provided in the center of a retainer 30, to which the airbag 10 is attached and bolt-penetrating holes 34 are formed around the inflator-attaching opening 32.

The inflator 36 has a substantially circular cylinder shape, and is provided with the gas blowing outlet 36a on a side circumferential surface of a distal side in a direction of a circular cylinder axis. In this embodiment, the gas blowing outlet 36a is disposed four in number at even distances in a circumferential direction of the inflator 36. The inflator 36 is configured such that the gas is blown-out from the gas blowing outlet 36a in a radial direction. A flange 38 for fixing the inflator 36 is installed in a protruding manner at a side circumferential surface of the inflator 36 at a middle part of the circular cylinder in the axis direction (at a rear side from the gas blowing outlet). In the flange 38, bolt penetrating holes 40 are formed. A distal side of the inflator 36 is fit into the inflator-attaching opening 32 of the retainer 30.

When the airbag 10 is attached to the retainer 30, a peripheral edge portion of the inflator-attaching opening 16 of the rear panel 14 and that of the inflator-attaching opening 24 of the second inner panel 22B are pressed on a peripheral edge portion of the inflator-attaching opening 32 of the retainer 30 by a holding ring 42. The distal side of the inflator 36 that is fit into the inflator-attaching opening 32 is inserted into the first chamber 1 via the inflator-attaching openings 16 and 24. Thereby, each of the gas blowing outlet 36a disposed at the distal side of the inflator 36 faces each of the rear-side openings 27 of the second inner panel 22B.

In this case, the second inner panel 22B, the airbag 10, and the inflator 36 are fixed to the retainer 30 by inserting a stud bolt 44 of the holding ring 42 into the bolt penetrating holes 26, 20, 34, and 40 and by screwing a nut 46 at an end thereof. Then, the airbag apparatus is formed by folding up the airbag 10 and attaching a module cover 48 such that the body of the folded airbag 10 is covered by the module cover 48. The airbag apparatus is installed in a steering wheel 50 of an automobile (Only a rim portion is shown in FIG. 1).

In the event of a collision of a motor vehicle, or the like, the inflator 36 activates and the gas is blown out from the inflator 36 into the airbag 10. The airbag 10 is expanded by the gas and pushes open the module cover 48 deploying in a vehicle interior to protect an occupant seated in the driver's seat.

In this airbag, as the sum Ar of the opening areas of the rear-side openings 27 and 28 is greater than the sum Af of the opening areas of the front-side openings 29, a larger amount of the gas in the first chamber 1 flows out from the rear-side openings 27 and 28 than from the front-side openings 29, and thereby an expanding speed of the airbag 10 in a radial direction increases. Further, as the sum A of the opening areas of each of the rear-side openings 27 and 28, and the front-side openings 29 is greater than the sum S of the opening areas of the vent holes 18, the amount of the gas flowing into the second chamber 2 becomes greater than that flowing out from the vent hole 18 and the entire airbag 10 including the second chamber 2 completes expanding operation earlier.

In particular, in the airbag 10, as the rear-side opening 27, which allows the first chamber 1 to communicate with the second chamber 2, is formed in extension of the gas blowing-out direction of the inflator 36 disposed in the first chamber 1, in other words, the rear-side opening 27 is formed at a position facing the gas blowing outlet 36a of the inflator 36, the gas is blown out toward the rear-side opening 27 from the gas blowing outlet 36a, when the inflator activates. Accordingly, the gas blown out from the inflator 36 is directly supplied to the second chamber 2 via the rear-side opening 27 as shown in FIG. 1. The second chamber 2 is thereby brought to be expanded earlier.

In the event that the occupant dives into the expanded airbag 10, the gas in an internal space of the first chamber 1 and the second chamber 2 is discharged through the rear-side opening 28 or the vent hole 18 and the impact is absorbed.

The above-described airbag is an example, and other airbag configurations are possible. For example, in the above-described airbag, although the gas blowing outlet 36a and the rear-side opening 27 are provided four in number, respectively, the number of the same is not limited to four. In addition, in the above-described airbag, although the rear-side opening 27 is formed in extension of the gas blowing-out direction of the inflator 36 of all the gas blowing outlets 36a, the rear-side opening 27 may be disposed in extension of the direction of only a part of the gas blowing outlet 36a. Further, part of the rear-side opening 27 may be disposed at a position displaced from the extension of the direction of the gas blowing outlet 36a and even a rear-side opening 27, which does not face the gas blowing outlet 36a, may exist.

The rear-side opening 27 may have a shape other than that shown in the drawings. In addition, the opening area of the rear-side opening 27 is selected according to an inner volume of the second chamber 2, or the like, and there is no particular limitation for that.

In this example, a guide cloth for guiding the gas to be led from the inflator 36 to the rear-side opening 27 may be provided in the first chamber 1.

In the above-described airbag, although the rear-side openings 27 and 28 are formed in the second inner panel 22B, only one of the rear-side openings 27 or 28 may be formed in the second inner panel 22B.

In the above-described airbag, although the first inner panel 22A is directly connected to the front panel 12 by the seam 23A, the first inner panel 22A may be connected to the front panel 12 through a connecting member such as a tether belt.

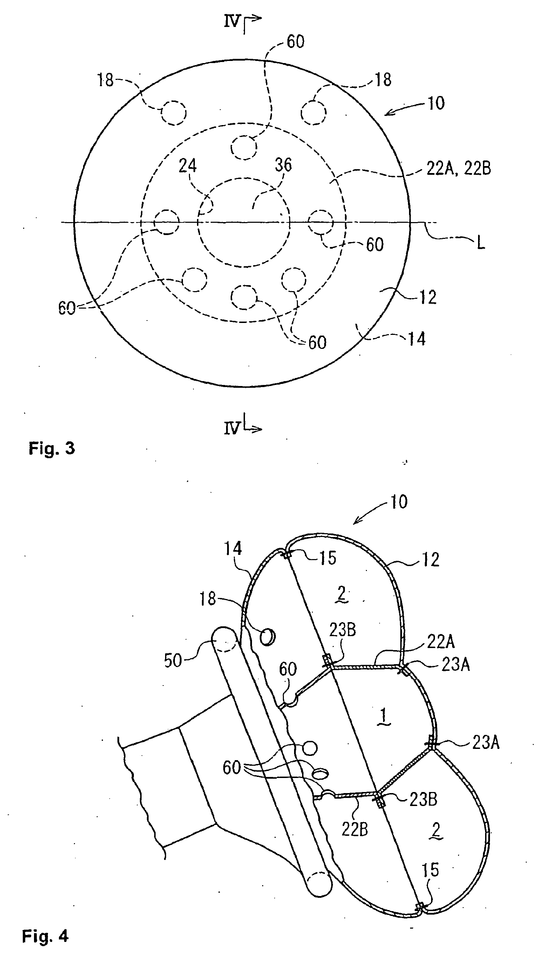

FIG. 3 is an elevation illustrating an airbag of an embodiment and FIG. 4 is a cross-section taken along IV-IV line of FIG. 3.

In this embodiment, the airbag 10 is also a driver-side airbag and the airbag apparatus provided with the airbag 10 is installed in the steering wheel 50 of the automobile. As illustrated in FIG. 4, the airbag 10 expands such that the face of the occupant side of the steering wheel 50 is covered therewith.

In this embodiment, the airbag 10 is also provided with the front panel 12, the rear panel 14, the first inner panel 22A, and the second inner panel 22B, each of which is made of round-shaped woven cloth, and an outline of the airbag 10 is formed by combining each of the outer peripheral edge portions of the front panel 12 and the rear panel 14 by the seam 15. In addition, an internal part of the airbag 10 is partitioned into two of the first chamber 1 at the center of the airbag 10 and the second chamber 2 that surrounds the first chamber 1, by providing the first and second inner panels 22A and 22B at the inside thereof.

Further, a configuration and the location of the panels 12, 14, 22A and 22B, and a connected structure of the panels are the same as that in the aforementioned airbag, shown in FIGs. 1 and 2, and an explanation thereof will be omitted.

In this embodiment, in the rear panel 14, the vent hole 18 is formed in an area above the center of the airbag 10 (i.e., a side above the center line L (in FIG. 3) extending in a horizontal direction through the center of the airbag. Hereinafter, a side above and below the center of the airbag 10 are referred to as a side above and below the center line L.) in a state that the airbag 10 is expanded so as to cover an occupant-side face of the steering 50.

Further, in this embodiment, two vent hole 18 are disposed in a left and right direction with a central focus on a center of the upper area of the rear panel 14 in the left and right direction spacing a predetermined distance.

In this embodiment, a plurality of openings 60 that allow the first chamber 1 to communicate with the second chamber 2 are formed in the second inner panel 22B of the rear panel 14 side. The openings 60 are disposed at an uneven distance around the inflator-attaching opening 24 (See FIG. 2, described above) located at a center of the second inner panel 22B. The openings 60 are distributed such that a sum A₂ of the opening areas of the openings 60 disposed at an area of a side below the center of the airbag 10 is greater than a sum A₁ of the opening areas of the openings 60 disposed at an area of a side above the center thereof.

In detail, as shown in FIG. 3, the openings 60 are disposed one in number at each of the positions of an upper side, a lower side, a left side, a right side, an obliquely lower side left, and an obliquely lower side right, around the inflator-attaching opening 24. In addition, the openings 60 disposed at the left side and right side of the inflator-attaching opening 24 are formed such that the openings 60 are straddling the center line L at both the upper side and the lower side from the center line L.

In this embodiment, the sum A₂ of the opening areas of the openings 60 disposed at a lower side of the airbag 10 from the center thereof is a sum of the opening areas of the three openings 60 disposed at each of the lower side, the obliquely lower side left, and the obliquely lower side right of the inflator-attaching opening 24, and the opening areas of the openings 60 disposed at each of the left side and the right side of the inflator-attaching opening 24 existing at a lower side from the center line L of the airbag 10, in the openings 60 disposed at the left side and the right side of the inflator-attaching opening 24. Further, the sum A₁ of the opening areas of the openings 60 disposed at an upper side from the center of the airbag 10 is a sum of the opening areas of the openings 60 disposed at an upper side of the inflator-attaching opening 24, and the opening areas of the openings 60 disposed at both the left and right sides of the inflator-attaching openings 24, , each of which are existing in the upper side from the center line L. That is, as for the opening 60 on the center line L, the opening area of the opening 60 existing in the upper side from the line L is considered to be joined to the sum of the upper side areas A₁ and the opening area of the opening 60 existing in the lower side from the center line L is considered to be joined to the sum of the lower side areas A₂.

Further, the two of the vent holes 18 are disposed to be out of the extension line in the gas blowing-out direction from the opening 60 disposed at the upper side of the inflator-attaching opening 24 and a predetermined area of a periphery of the extension line.

Other configuration of the airbag 10 and other configuration of the driver-side airbag apparatus having the airbag 10 are the same as the airbag illustrated in FIGs. 1 and 2, and thus, a same reference numeral of the element in FIGs. 1 and 2 denotes the element in FIGs. 3 and 4.

In this embodiment, in the event of the collision of the motor vehicle, or the like, the inflator 36 is activated and the gas blows out into the airbag 10. The airbag 10 is thereby expanded and pushes open the module cover (not shown in FIG. 4). The airbag thereby protects the occupant in the driver's seat by being expanded and by deploying such that the airbag covers a face of an occupant-side steering wheel 50.

In this embodiment, as the vent hole 18 is disposed at the side above the center of the airbag 10 and the opening 60 that allows the first chamber 1 to communicate with the second chamber 2 is distributed such that the sum A₂ of the opening areas of the openings 60 disposed in the area of the side below the center of the airbag 10 is greater than the sum A₁ of the opening areas of the openings 60 disposed at a side above the center of the airbag 10, a problem that the in-flow gas into the second chamber 2 simplistically flows toward the vent hole 18 and is discharged from the airbag 10 is suppressed. Thereby, the entire airbag 10 including the second chamber 2 completes expanding operation earlier.

Furthermore, by thus designing the sum A₂ of the opening areas of the openings 60 disposed at the area of a side below the center of the airbag 10 greater, an expansion of the airbag 10 at the side below the center thereof is promoted. Accordingly, the airbag 10 can suppress a forward displacement of the occupant by catching a chest region or an abdominal region of the occupant earlier.

In addition, this embodiment is also an example of the present invention and the configuration such as the shape, the number, and the disposition of the opening 60 and the vent hole 18 is not limited to this embodiment.

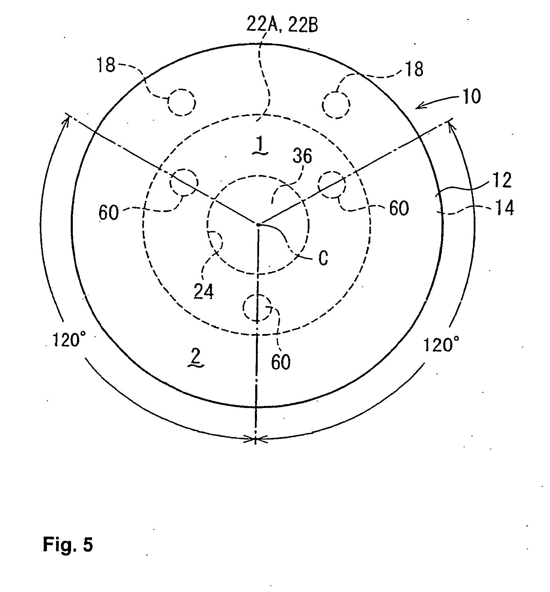

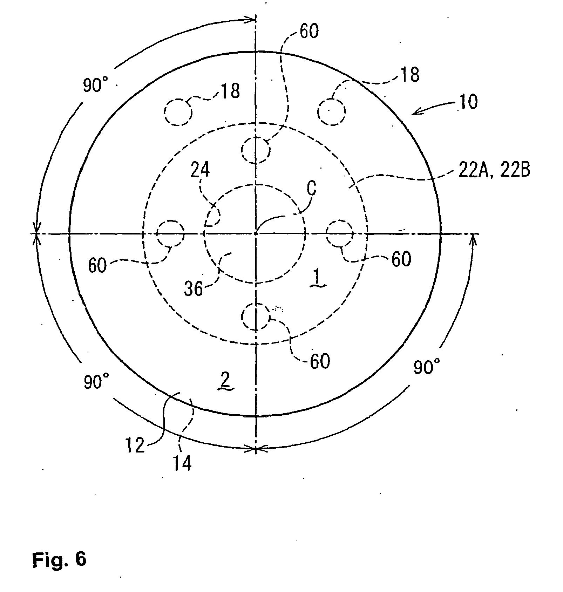

In the present invention, when the airbag is the airbag for use in the driver's seat that is connected to the steering wheel and is expanded in a manner so as to cover the occupant side of the steering wheel, it is preferable that continuous openings for allowing the first chamber to communicate with the second chamber is provided in the inner panel at least three in number being disposed at approximately even intervals around a center of the rotation shaft of the steering wheel. FIGs. 5 and 6 are plan views respectively illustrating examples of the thus constructed airbag which do not represent embodiments for use in the driver's seat. Further, FIG. 5 illustrates an example where the openings are disposed three in number in the inner panel, and FIG. 6 illustrates another example where the openings are disposed four in number in the inner panel.

Even in each of the airbags, shown in FIGs. 5 and 6, the airbag 10 is composed of the front panel 12, the rear panel 14, and the first and second inner panels 22A and 22B, each of which is formed of round shaped woven cloth, by means of stitching work. A peripheral edge portion of the opening 24 for the inflator provided at a center of the rear panel 14 is connected to the retainer (not shown), and the airbag 10 is mounted on a center portion (hub portion) of the steering wheel (not shown) via the retainer. The airbag 10 is expanded and developed in a manner so as to cover the occupant side of the steering wheel. In each of the airbags, shown in FIGs. 5 and 6, a center (a center of the first chamber 1) of the airbag 10, when being expanded, is disposed in a concentric manner with a center C of the rotation shaft of the steering wheel. The center of the airbag 10, when being expanded, may be deviated in some degree from the center C of the rotation shaft of the steering wheel.

In the airbag, shown in FIG. 5, three openings 60 are disposed in approximately even intervals (approximately at every 120°) around a center C of the rotation shaft of the steering wheel in the inner panels 22A or 22B. Further, the one of the three openings 60 is disposed below the center C of the rotation shaft of the steering wheel in the vertical direction when the steering wheel has a steering posture of a motor vehicle that drives straight-ahead, and the remaining two openings are respectively disposed diagonally upward left and diagonally upward right from the center C of the rotation shaft of the steering wheel.

In the airbag, shown in FIG. 6, four openings 60 are disposed in approximately even intervals (approximately at every 90°) around a center C of the rotation shaft of the steering wheel in the inner panels 22A or 22B. Further, the openings 60 are respectively disposed above and below the center C of the rotation shaft of the steering wheel in the vertical direction and the left and the right from the center C of the rotation shaft of the steering wheel when the steering wheel has a steering posture of a motor vehicle that drives straight-ahead.

The construction other than that in the airbags, shown in FIGs. 5 and 6 is the same as that of the embodiment, shown in FIGs. 3 and 4, described above, and the same numerals in FIGs. 5 and 6 as that in FIGs. 3 and 4 denote the same elements in FIGs. 3 and 4.

As is described in each of the airbags, shown in FIGs. 5 and 6, when at least three openings 60 are disposed around the center C of the rotation shaft of the steering wheel in the approximately even intervals in the inner panels 22A and 22B, whatever the angles the steering wheel has (as a steering posture), at least one opening 60 exists at a side lower than the center C of the rotation shaft of the steering wheel. Therefore, whatever the angle of the steering wheel is, the gas is supplied from the first chamber 1 to the lower side of the second chamber 2 at the time.

Though not shown, not less than five openings 60 may be disposed around the center C of the rotation shaft of the steering wheel in approximately even intervals in the inner panels 22A, or 22B.

However, when not less than four openings 60 are disposed in the inner panels 22A, or 22B, it is sufficient that a positional relationship among at least three of the openings 60 is in approximately even intervals around the center C of the rotation shaft of the steering wheel.

In addition, as also shown in FIG. 4, because the steering wheel is usually tilted in a manner such that the lower the position on the steering wheel is, the narrower the interval between the steering wheel and the occupant is, it is required that the lower portion side of the airbag that covers the lower portion side of the steering wheel is promptly expanded and developed in the airbag for use in the driver's seat.

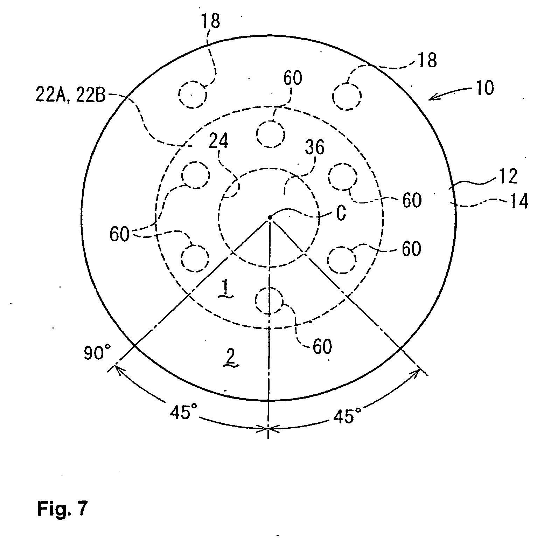

In the present invention, in a case when the airbag is an airbag for use in a driver's seat, it is preferable that when the steering wheel has a posture of a motor vehicle that drives straight-ahead, at least one continuous opening for allowing the first chamber to communicate with the second chamber is disposed within areas in each of angles of approximately 45° in the left and the right directions around the rotation center of a shaft of the steering wheel, sandwiching a position approximately below the rotation center of the shaft of the steering wheel in the vertical direction in the inner panel. FIG. 7 is a plan view showing an example of the thus constructed airbag which is not an embodiment.

In this airbag, in the inner panels 22A, or 22B, six openings 60 are disposed around the center C of the rotation shaft of the steering wheel in approximately even intervals (approximately in every 60°). As shown in FIG. 7, at least one of six openings 60 is disposed within areas in each of angles of approximately 45° in the left and the right directions around the rotation center C of the shaft of the steering wheel, sandwiching a position approximately below the rotation center C of the shaft of the steering wheel in the vertical direction in the inner panel when the steering wheel has a posture of the motor vehicle that drives straight-ahead.

The construction other than that in the airbag shown in FIG. 7 is the same as that of the embodiment, shown in FIGs. 3 and 4, described above, and the same numerals in FIG. 7 as that in FIGs. 3 and 4 denote the same elements in FIGs. 3 and 4.

In this airbag 10, the expansion and the development at a lower side of the second chamber 2 toward the lower side of the steering wheel where the interval between the occupant and the steering wheel is narrower is accelerated.

Further, in the inner panels 22A, and 22B, when the steering wheel has a posture of a motor vehicle that drives straight-ahead, not less than two openings may be disposed within areas in each of angles of approximately 45° in the left and the right directions around the rotation center of the shaft of the steering wheel, sandwiching a position approximately below the rotation center of the shaft of the steering wheel in the vertical direction in the inner panel. The number and the disposition of the openings 60 disposed out of the areas are not limited to that shown in FIG. 7.

Any one of the above-described embodiments is illustrative of the present invention, and is not to be construed as limiting the invention.

## Claims

1. An airbag configured to be expanded by gas from a gas generator comprising:
a front panel (12) disposed at an occupant side; and a rear panel (14) disposed at a side opposite to the occupant, wherein each of peripheral edge portions of the front panel (12) and the rear panel (14) are connected together, and the airbag (10) further comprising:
an attaching opening (16) for the gas generator (36) provided in a center of the rear panel (14); and
an inner panel (22A, 22B) disposed inside the airbag (10), partitioning an internal part of the airbag (10) into a first chamber (1) at a center thereof and a second chamber (2) surrounding the first chamber (1), wherein
at least one opening (27, 28, 29; 60) for allowing the first chamber (1) to communicate with the second chamber (2) is provided in the airbag (10), wherein
a sum of the opening areas of the at least one opening (27, 28, 29; 60) is determined to be from 40 cm² to 700 cm²,
wherein at least one vent hole (18) is formed in the rear panel (14), and a sum A of the opening areas of the at least one opening (27, 28, 29; 60) is greater than a sum S of the opening areas of the at least one vent hole (18),
wherein the at least one vent hole (18) is disposed at a side above the center (L) of the airbag (10) when the airbag (10) is in a state of being installed in a high-speed mobile unit, and wherein
a sum A₂ of the opening areas of openings (60) of the at least one opening disposed at a side below the center (L) of the airbag (10) is greater than a sum A₁ of the opening areas of openings (60) of the at least one opening disposed at a side above the center (L) of the airbag (10).

2. The airbag according to Claim 1, wherein at least one front-side opening (29) of the front panel side and at least one rear-side opening (27, 28) of the rear panel side are provided in the inner panel (22A, 22B) for serving as the at least one opening, and wherein a sum Ar of the opening areas of the at least one rear-side opening (27, 28) is greater than a sum Af of the opening areas of the at least one front-side opening (29).

3. The airbag according to Claim 1 or 2, wherein a thickness of the airbag (10) is from 20 to 35 cm, when the airbag (10) is expanded.

4. The airbag according to any one of Claims 1 through 3, wherein the airbag is an airbag for use in a driver's seat connected to a steering wheel (50) and is expanded in a manner so as to cover the occupant side of the steering wheel (50), and wherein at least three openings (60) are provided being disposed around a center (C) of a rotation shaft of the steering wheel (50) in approximately even intervals in the inner panel (22A, 228).

5. The airbag according to any one of Claims 1 through 4, wherein the airbag is an airbag (10) for use in a driver's seat connected to the steering wheel (50) and is expanded in a manner so as to cover the occupant side of the steering wheel (50), and wherein when the steering wheel (50) has a posture of a high-speed vehicle that drives straight-ahead, at least one opening (60) is disposed within areas in each of angles of approximately 45° in the left and the right directions around the rotation center (C) of a shaft of the steering wheel (50), sandwiching a position approximately below the rotation center (C) of the shaft of the steering wheel (50) in the vertical direction in the inner panel (22A, 22B) .

6. An airbag apparatus comprising: an airbag (10); and a gas generator (36) having a gas blowing outlet (36a), wherein
the airbag is the airbag (10) according to any one of Claims 1 through 5.

## Patentansprüche

1. Airbag, welcher derart ausgestaltet ist, dass er sich durch ein Gas von einem Gasgenerator ausdehnt, und welcher umfasst:
eine vordere Stoffbahn (12), welche auf einer Insassenseite angeordnet ist; und
eine hintere Stoffbahn (14), welche auf einer dem Insassen gegenüberliegenden Seite angeordnet ist, wobei Umfangskantenabschnitte der vorderen Stoffbahn (12) und der hinteren Stoffbahn (14) jeweils miteinander verbunden sind, und wobei der Airbag (10) darüber hinaus umfasst:
eine Aufnahmeöffnung (16) für den Gasgenerator (36), welche in einer Mitte der hinteren Stoffbahn (14) vorhanden ist; und
eine innere Stoffbahn (22A, 22B), welche innerhalb des Airbags (10) vorhanden ist und einen inneren Abschnitt des Airbags (10) in eine erste Kammer (1) in einer Mitte davon und in eine zweite Kammer (2), welche die erste Kammer (1) umgibt, aufteilt, wobei
mindestens eine Öffnung (27, 28, 29; 60) in dem Airbag (10) vorhanden ist, damit die erste Kammer (1) mit der zweiten Kammer (2) kommunizieren kann, wobei
eine Summe der Öffnungsbereiche der mindestens einen Öffnung (27, 28, 29; 60) derart festgesetzt ist, dass sie 40 cm² bis 700 cm² beträgt,
wobei mindestens ein Luftloch (18) in der hinteren Stoffbahn (14) ausgebildet ist, und wobei eine Summe A der Öffnungsbereiche der mindestens einen Öffnung (27, 28, 29; 60) größer als eine Summe S der Öffnungsbereiche des mindestens einen Luftloches (18) ist,
wobei das mindestens eine Luftloch (18) auf einer Seite oberhalb der Mitte (L) des Airbags (10) angeordnet ist, wenn der Airbag (10) in einem Zustand vorliegt, dass er in einer sich mit hoher Geschwindigkeit bewegenden mobilen Einheit installiert ist, und wobei
eine Summe A₂ der Öffnungsbereiche der Öffnungen (60) der mindestens einen Öffnung, welche auf einer Seite unterhalb der Mitte (L) des Airbags (10) angeordnet ist, größer als eine Summe A₁ der Öffnungsbereiche von Öffnungen (60) der mindestens einen Öffnung, welche auf einer Seite oberhalb der Mitte (L) des Airbags (10) angeordnet ist, ist.

2. Airbag nach Anspruch 1, wobei mindestens eine vorderseitige Öffnung (29) auf der Seite der vorderen Stoffbahn und mindestens eine rückseitige Öffnung (27, 28) auf der Seite der hinteren Stoffbahn in der inneren Stoffbahn (22A, 22B) vorhanden sind, um als die mindestens eine Öffnung zu dienen, und wobei eine Summe Ar der Öffnungsbereiche der mindestens einen rückseitigen Öffnung (27, 28) größer als eine Summe Af der Öffnungsbereiche der mindestens einen vorderseitigen Öffnung (29) ist.

3. Airbag nach Anspruch 1 oder 2, wobei eine Dicke des Airbags (10) 20 bis 35 cm beträgt, wenn der Airbag (10) ausgedehnt ist.

4. Airbag nach einem der Ansprüche 1 bis 3, wobei der Airbag ein Airbag zur Verwendung in einem Fahrersitz ist, welcher mit einem Lenkrad (50) verbunden ist und in einer Weise ausgedehnt wird, dass er die Insassenseite des Lenkrads (50) überdeckt, und wobei mindestens drei Öffnungen (60) vorhanden sind, welche sich um eine Mitte (C) einer Drehwelle des Lenkrads (50) herum mit näherungsweise gleichen Abständen in der inneren Stoffbahn (22A, 22B) befinden.

5. Airbag nach einem der Ansprüche 1 bis 4, wobei der Airbag ein Airbag (10) zur Verwendung in einem Fahrersitz ist, welcher mit dem Lenkrad (50) verbunden ist und welcher in einer Weise ausgedehnt wird, um die Insassenseite des Lenkrads (50) abzudecken, und wobei, wenn das Lenkrad (50) eine Stellung eines Hochgeschwindigkeitsfahrzeugs, welches geradeaus fährt, aufweist, mindestens eine Öffnung (60) innerhalb von Bereichen in jeweils Winkelbereichen von näherungsweise 45° in der linken und der rechten Richtung um die Drehmitte (C) einer Welle des Lenkrads (50) herum vorhanden ist, wobei eine Position näherungsweise unter der Drehmitte (C) der Welle des Lenkrads (50) in der vertikalen Richtung in der inneren Stoffbahn (22A, 22B) überdeckt ist.

6. Airbagvorrichtung umfassend: einen Airbag (10); und einen Gasgenerator (36) mit einem Gasauslass (36a), wobei
der Airbag der Airbag (10) nach einem der Ansprüche 1 bis 5 ist.

## Revendications

1. Un coussin gonflable de sécurité, configuré pour être gonflé par du gaz provenant d'un générateur de gaz, comprenant :
un panneau avant (12), disposé sur un côté occupant; et un panneau arrière (14), disposé sur un côté opposé à l'occupant, dans lequel chacune des parties de bordure périphérique, du panneau avant (12) et du panneau arrière (14), sont connectées ensemble, et le coussin gonflable de sécurité (10) comprenant en outre:
une ouverture de fixation (16) pour le générateur de gaz (36) prévue au centre du panneau arrière (14); et
un panneau intérieur (22A, 22B) disposé à l'intérieur du coussin gonflable de sécurité (10), subdivisant une partie interne du coussin gonflable de sécurité (10) en une première chambre (1), au centre de celle-ci, et en une deuxième chambre (2), entourant la première chambre (1), dans lequel
au moins une ouverture (27, 28, 29; 60) pour permettre à la première chambre (1) de communiquer avec la deuxième chambre (2) est prévue dans le coussin gonflable de sécurité (10), dans lequel
la somme des surfaces d'ouverture de la au moins une ouverture (27, 28, 29; 60) est déterminée pour être dans la fourchette allant de 40 cm² à 700 cm²,
dans lequel au moins un trou d'évent (18) est formé dans le panneau arrière (14), et une somme A des surfaces d'ouverture de la au moins une ouverture (27, 28, 29; 60) est plus grande qu'une somme S des surfaces d'ouverture du au moins un trou d'évent (18),
dans lequel le au moins un trou d'évent (18) est disposé sur un côté situé au-dessus du centre (L) du coussin gonflable de sécurité (10) lorsque le coussin gonflable de sécurité (10) est dans l'état d'être installé dans une unité mobile à grande vitesse, et dans lequel
une somme A2 des surfaces d'ouverture des ouvertures (60) de la au moins une ouverture disposée sur un côté situé au-dessous du centre (L) du coussin gonflable de sécurité (10) est plus grande qu'une somme A1 des surfaces d'ouverture des ouvertures (60) de la au moins une ouverture disposée sur un côté situé au-dessus du centre (L) du coussin gonflable de sécurité (10).

2. Le coussin gonflable de sécurité selon la revendication 1, dans lequel au moins une ouverture de côté avant (29) du côté du panneau avant et au moins une ouverture de côté arrière (27, 28) du côté du panneau arrière sont prévues dans le panneau intérieur (22A, 22B) pour servir de la au moins une ouverture, et dans lequel une somme Ar des surfaces d'ouverture de la au moins une ouverture de côté arrière (27, 28) est plus grande qu'une somme Af des surfaces d'ouverture de la au moins une ouverture de côté avant (29).

3. Le coussin gonflable de sécurité selon la revendication 1 ou 2, dans lequel une épaisseur du coussin gonflable de sécurité (10) est comprise dans la fourchette allant de 20 à 35 cm, lorsque le coussin gonflable de sécurité (10) est gonflé.

4. Le coussin gonflable de sécurité selon l'une quelconque des revendications 1 à 3, dans lequel le coussin gonflable de sécurité est un coussin gonflable de sécurité devant être utilisé dans un siège de conducteur, relié à un volant de direction (50) et gonflé de manière à couvrir le côté occupant du volant de direction (50), et dans lequel au moins trois ouvertures (60) sont prévues, disposées autour d'un centre (C) d'un arbre de rotation du volant de direction (50), à des intervalles à peu près identiques, dans le panneau intérieur (22A, 22B).

5. Le coussin gonflable de sécurité selon l'une quelconque des revendications 1 à 4, dans lequel le coussin gonflable de sécurité est un coussin gonflable de sécurité (10) pour utilisation dans un siège de conducteur, relié au volant de direction (50) et gonflé de manière à couvrir le côté occupant du volant de direction (50), et dans lequel, lorsque le volant de direction (50) est dans une posture de véhicule à grande vitesse roulant en ligne droite, au moins une ouverture (60) est disposée dans des zones situées dans chacun des angles d'environ 45° dans la direction de la gauche et de la droite autour du centre de rotation (C) d'un arbre du volant de direction (50), prenant en sandwich une position située à peu près au-dessous du centre de rotation (C) de l'arbre du volant de direction (50), dans la direction verticale du panneau intérieur (22A, 22B).

6. Un dispositif à coussin gonflable de sécurité comprenant : un coussin gonflable de sécurité (10); et un générateur de gaz (36) ayant une sortie de soufflage de gaz (36a), dans lequel dispositif, le coussin gonflable de sécurité est le coussin gonflable de sécurité (10) selon l'une quelconque des revendications 1 à 5.
